# FASCICULE DE BREVET EUROPEEN

(11) **EP 1 034 386 B1**
(45) Date de publication et mention de la délivrance du brevet: **06.03.2002**
(21) Numéro de dépôt: 98956950.4
(22) Date de dépôt: 25.11.1998
(51) Int. Cl.: F16H 55/24, H02K 7/08, F16C 17/08

(54) **MOTOREDUCTEUR POUR L'ENTRAINEMENT D'EQUIPEMENTS DE VEHICULES AVEC SUPPRESSION DE JEU AXIAL DE SA LIGNE D'ARBRE**
GETRIEBEMOTOR ZUM ANTRIEB VON AUTOZUBEHÖR, MIT MITTEL ZUR BESEITIGUNG DES AXIALSPIELS SEINER ACHSE
GEAR MOTOR FOR DRIVING VEHICLE EQUIPMENT WITH ELIMINATION OF TRANSMISSION LINE AXIAL PLAY

(30) Priorité: 27.11.1997 FR 9714950
(43) Date de publication de la demande: 13.09.2000
(73) Titulaire: Meritor Light Vehicle Systems-France, 92082 Paris La Defense 2 (FR)
(72) Inventeur: NOMERANGE, Hervé, Marcel, F-14000 Caen (FR)
(74) Mandataire: Jacobson, Claude
(86) Numéro de dépôt international: FR9802531
(87) Numéro de publication internationale: WO9928656

(56) Documents cités:
- EP-A- 0 599 063
- WO-A-97/43564
- DE-A- 3 744 274
- DE-A- 4 137 607
- DE-A- 19 513 970
- US-A- 3 774 981
- PATENT ABSTRACTS OF JAPAN vol. 018, no. 297 (M-1617), 7 juin 1994 & JP 06 058327 A (MITSUBA ELECTRIC MFG CO LTD), 1 mars 1994

## Description

La présente Invention a pour objet un motoréducteur, notamment pour l'entraînement d'équipements de véhicules tels que lève-vitre, toit ouvrant etc, du type comprenant un rotor pourvu d'un arbre d'induit, un carter réducteur qui contient une roue dentée en prise avec une vis sans fin de l'arbre, et pouvant entraîner un organe de sortie, ainsi que des moyens pour supprimer, sous une précompression axiale déterminée, tout jeu axial entre une extrémité de l'arbre d'induit et la paroi du carter.

Les motoréducteurs de ce type sont normalement munis de moyens de réglage du jeu axial entre une extrémité de l'arbre d'induit et la paroi du carter. En effet, le jeu axial de la ligne d'arbre montée dans le motoréducteur est dû à l'empilement des dispersions des dimensions des différentes pièces au montage (arbre, butée, carter,...) lesquelles mises bout à bout sont moins longues que leur logement.

Jusqu'à présent, ce jeu axial a été compensé manuellement au moyen d'une vis logée dans l'extrémité du carter en regard du trou d'arbre d'induit, et qui est bloquée par une colle assurant en même temps l'étanchéité. Un tel procédé de réglage est long à exécuter, onéreux et accroît le coût global de fabrication du motoréducteur.

Il est également connu par le brevet US 5 169 245, de réaliser une compensation automatique du jeu axial de la ligne d'arbre du motoréducteur au moyen d'un ressort hélicoïdal prenant appui dans un logement axial de l'extrémité du carter, et d'un système de butée adapté pour limiter à une valeur prédéterminée l'effort de compression axiale subi par le ressort hélicoïdal. Cette limitation est obtenue par un épaulement intérieur de la paroi du carter, contre lequel vient en butée un piston intercalé entre l'extrémité de l'arbre et le ressort hélicoïdal. Un dispositif analogue est connu du document WO 97/43 564 qui représente l'état de la technique le plus proche de l'invention.

On connaît aussi par le Patent Abstracts of Japan Vol. 018 n° 297 du 7.6.1994 un motoréducteur dans lequel une butée fixée par soudage à une extrémité du carter supprime tout jeu axial. entre l'arbre d'induit et la paroi du carter.

Le document DE 41 37 607 décrit un dispositif de compensation du jeu axial par injection d'une matière plastique durcissable dans un évidemment du carter prévu à cet effet, une pièce de butée et une bille en acier étant interposées entre l'extrémité d'arbre et la matière injectée.

Ces dispositifs de compensation du jeu axial présentent un inconvénient résidant dans le fait qu'ils ne peuvent supprimer complètement les bruits gênants de l'arbre provoqués lors de ses changements de sens de rotation.

L'invention a donc pour but d'éliminer cet inconvénient en agençant le motoréducteur de matière à supprimer complètement ces bruits.

Conformément à un mode de réalisation de l'invention, lesdits moyens comprennent un bouchon logé dans l'extrémité du carter et un piston, intercalé entre le bouchon et l'extrémité de l'arbre, le bouchon exerçant sur le piston et sur l'arbre ladite précompression axiale, réglée au montage ; le motoréducteur comprend également des moyens pour bloquer le piston dans sa position axiale correspondant à ladite précompression, et les moyens de blocage du piston dans sa position axiale comprennent des irrégularités formées sur la surface du piston en contact avec la paroi intérieure du carter, telles que des rainures, le piston étant métallique, et le blocage du piston par rapport à la paroi du carter est obtenu par fusion de la matière plastique constituant le carter dans lesdites aspérités ; cette fusion peut être obtenue par exemple par une sonotrode, machine à souder par ultrasons, ou encore par soudure haute fréquence.

Ainsi, après montage et réglage initial du jeu par un positionnement adéquat du bouchon et du piston en appui contre l'extrémité de l'arbre d'induit, au moyen d'une poussée axiale prédéterminée, par exemple 100 Newtons, le piston est mécaniquement fixé à la paroi du carter, à l'emplacement axial voulu par rapport à l'arbre d'induit. Ce dernier ne peut plus se déplacer axialement lors des changements de sens de rotation et par conséquent provoquer des bruits gênants.

Selon un autre mode de réalisation possible de l'invention, le motoréducteur comprend un bouchon métallique monté coulissant dans un logement axial formé dans la paroi du carter en regard de l'extrémité de l'arbre ; des irrégularités sont agencées sur la surface de ce bouchon en contact avec la paroi du logement, et le bouchon est déplacé axialement jusqu'à ce qu'il vienne en butée contre l'extrémité de l'arbre sous une poussée de précompression déterminée, puis bloqué dans cette position afin de supprimer tout jeu de l'arbre.

Ce type de réalisation est donc dépourvu de piston, le bouchon remplissant à lui seul la fonction du bouchon et du piston de la réalisation précédente, et étant bloqué dans la position voulue pour exercer une poussée axiale appropriée sur l'arbre.

L'idée de base de l'invention consiste donc à supprimer le jeu axial réservé dans les motoréducteurs de l'état de la technique antérieure, et ce sous une précompression ou poussée axiale déterminée, par exemple de l'ordre de 100 Newtons.

D'autres particularités et avantages de l'invention apparaîtront au cours de la description qui va suivre, faite en référence aux dessins annexés qui en illustrent plusieurs formes de réalisation à titre d'exemples non limitatifs.

La figure 1 est une vue en élévation longitudinale et coupe partielle d'un motoréducteur pour l'entraînement d'équipements de véhicules automobiles, muni d'un dispositif de suppression du jeu axial de sa ligne d'arbre conforme à l'invention.

La figure 2 est une vue en coupe transversale suivant 2/2 de la figure 3, illustrant une première forme de réalisation du motoréducteur selon l'invention.

La figure 3 est une vue en coupe longitudinale partielle montrant une extrémité du motoréducteur de la figure 1 équipé d'un dispositif de suppression du jeu axial de l'arbre selon un premier mode de réalisation de l'invention.

La figure 4 est une vue en coupe longitudinale partielle analogue à la figure 3 illustrant une seconde forme de réalisation du dispositif de suppression du jeu axial dans le motoréducteur selon l'invention.

La figure 5 est une vue en élévation latérale d'une variante de réalisation du piston des figures 3 et 4.

Les figures 6, 7 et 8 sont des vues analogues à la figure 3 de trois autres formes de réalisation du dispositif de suppression du jeu axial visé par l'invention.

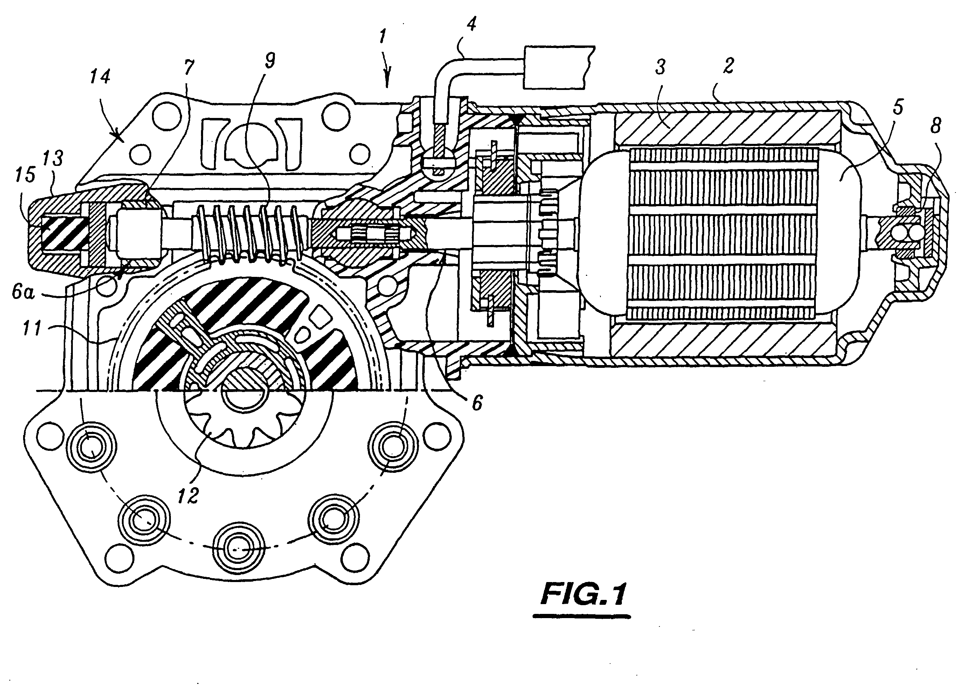

Le motoréducteur 1 illustré à la figure 1 est destiné notamment à l'entraînement d'équipements de véhicules, tel que lève-vitre électrique.

Il comprend, logé à l'intérieur d'un boîtier 2, un stator 3 pouvant être alimenté par des connexions électriques 4 de manière connue, un rotor 5 pourvu d'un arbre d'induit 6 dont les extrémités sont montées dans des paliers 7, 8 de roulement. Cet arbre d'induit porte une vis sans fin 9 en prise avec une roue dentée 11 pouvant entraîner un organe de sortie 12, qui lui-même entraîne l'équipement associé au motoréducteur, par exemple un lève-vitre, un toit ouvrant...

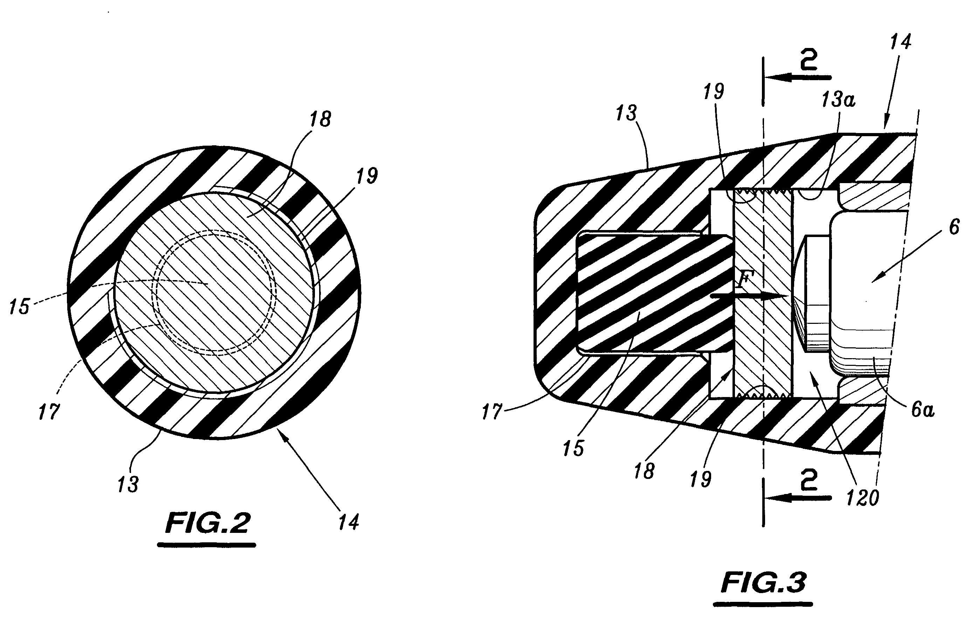

L'extrémité 6a de l'arbre d'induit 6 traversant le palier 7, situé au voisinage de la vis sans fin 9, coopère avec un dispositif 12 permettant de supprimer, sous une précompression axiale déterminée F (figure 3) tout jeu axial entre l'extrémité 6a de l'arbre 6 et la paroi 13 du carter réducteur 14.

Dans le mode de réalisation illustré aux figures 2 et 3, les moyens constitutifs du dispositif 12 comprennent un bouchon 15 en un matériau élastique tel qu'un élastomère, disposé dans un logement terminal 17 de l'extrémité de la paroi 13 et faisant saillie axialement de ce logement 17, en direction de l'extrémité 6a de l'arbre 6. Le dispositif 12 comporte également un piston 18 intercalé entre le bouchon 15 et l'extrémité 6a de l'arbre 6. Sur la surface périphérique du piston 18, en contact avec la paroi intérieure 13a de l'extrémité 13 du carter 14, sont agencées des irrégularités telles que des rainures circulaires 19 ou bien en variante un filetage, un crantage, des rainures axiales, un moletage... le piston 18 étant métallique, tandis que le carter 14 est en matière plastique.

Au montage du motoréducteur, le piston 18 est appliqué sur le bouchon 15 en précomprimant celui-ci de manière qu'il exerce sur le piston 18 et sur l'extrémité 6a de l'arbre 6, une poussée axiale F de précompression, d'une valeur appropriée telle que 100 Newtons environ.

Une fois cette précompression F réglée à la valeur voulue, le piston 18 est bloqué dans sa position axiale correspondant à ladite précompression du bouchon 15, et ce en chauffant la matière plastique de l'extrémité 13 du carter 14 en regard des irrégularités de surface du piston 18, de sorte que la matière plastiqué fondue remplisse ses rainures ou gorges 19. La solidification ultérieure de la matière plastique par refroidissement fixe définitivement dans cette position le piston 18 à l'extrémité 13 du carter 14. Cette fusion de la matière plastique peut être provoquée par des moyens appropriés non représentés, tel qu'un générateur d'ultrasons ou par soudure haute fréquence.

Après cette fixation du piston 18 au carter 14, les changements de sens de rotation de l'arbre d'induit 6 ne peuvent plus entraîner de déplacement axial de celui-ci et par conséquent aucun bruit gênant.

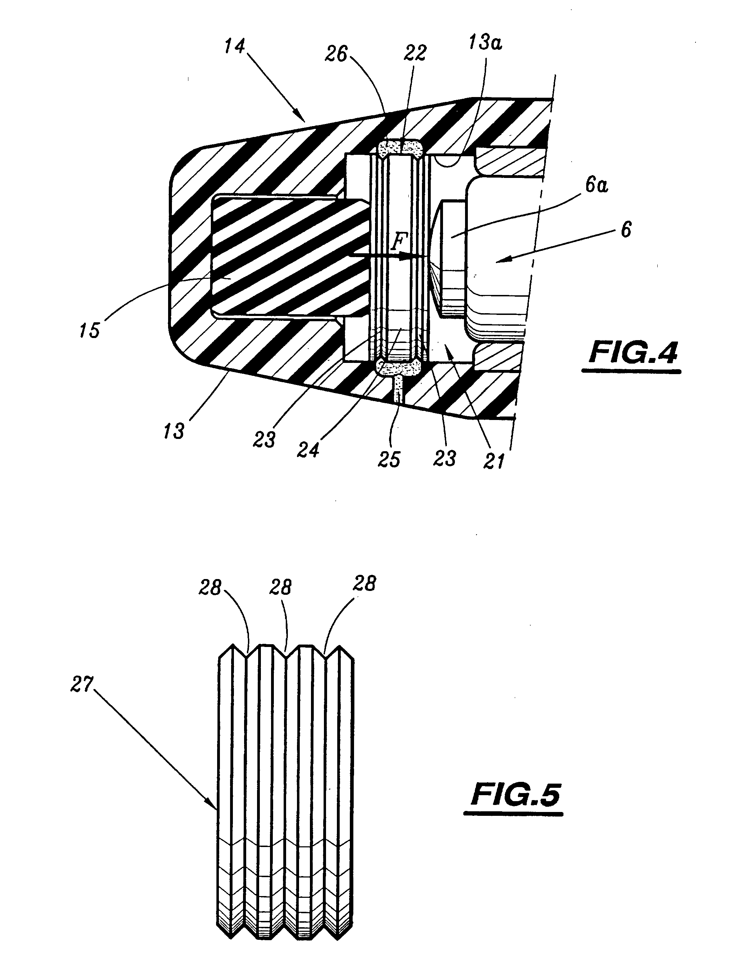

Dans la seconde forme de réalisation illustrée à la figure 4, le dispositif 21 comprend un piston 22 dont les irrégularités de la surface périphérique, en contact avec la paroi intérieure 13a, sont constituées par deux gorges circulaires 23 formées sur les bords du piston 22 et séparées par une zone cylindrique 24. Corrélativement au moins un canal 25 est agencé latéralement au piston 22 dans la paroi 13 du carter 14 et débouche dans une chambre annulaire 26 de la paroi 13, cette chambre 26 s'ouvrant elle-même sur les rainures circulaires 23.

Le réglage de ce dispositif 21 de suppression du jeu axial de l'arbre 6 s'effectue de la manière suivante: on procède tout d'abord au réglage de la précompression axiale F du bouchon 15 à la valeur voulue, afin de positionner exactement le piston 22 à l'emplacement axial approprié, en regard de la chambre 26. Puis on injecte une colle liquide dans le canal latéral 25 de manière qu'elle remplisse la chambre 26 et les gorges 23. La pression d'injection de la colle liquide est quelconque. Après durcissement, la colle remplit entièrement les gorges 23, la chambre 26 et le canal 25 ainsi hermétiquement obturés, et bloque en place le piston 22 par rapport à la paroi 13 du carter 14. Comme précédemment, le piston 22 supprime tout jeu axial de l'arbre d'induit 6 et par conséquent tout bruit parasite lors des changements de sens de rotation de celui-ci.

Dans la variante de réalisation de la figure 5, le piston 27 comporte trois gorges circulaires 28, la zone cylindrique centrale 24 ayant été supprimée. Par ailleurs le mode de mise en oeuvre du piston 27 est tout à fait similaire à celui du piston 22.

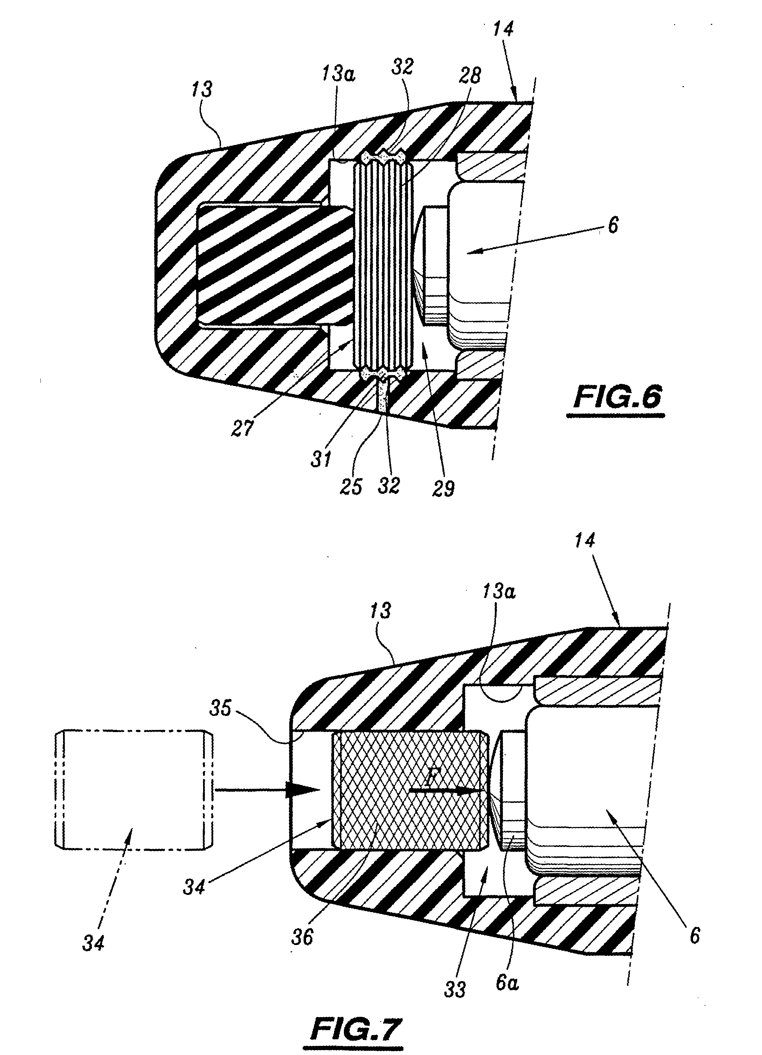

Dans la variante de réalisation de la figure 6, le dispositif 29 de suppression du jeu axial de l'arbre 6 comprend un piston 27 à plusieurs gorges circulaires 28 et un chambrage périphérique 31 profilé de manière à délimiter en regard des gorges 28, des gorges complémentaires 32 ménagées dans la paroi 13 du carter 14. Ce chambrage 31 et les gorges 28 peuvent être remplis de colle liquide par le canal latéral 25, le piston 27 étant bloqué en place par la colle solidifiée.

La figure 7 illustre une quatrième forme de réalisation de l'invention dans laquelle le dispositif 33 de suppression du jeu de l'arbre 6 comprend un bouchon métallique 34 d'un diamètre supérieur au diamètre du logement axial 35 formé dans la paroi 13 du carter réducteur 14 en regard de l'extrémité 6a de l'arbre 6. Des irrégularités 36 sont agencées sur la surface de ce bouchon 34 en contact avec la paroi du logement 35, par exemple un moletage comme représenté, ou encore un crantage etc.

Le bouchon 34 est déplacé axialement dans le logement 35 par fusion de la matière plastique de la paroi 13, utilisant des moyens connus et non représentés jusqu'à ce qu'il vienne en butée contre l'extrémité 6a de l'arbre 6 sous une poussée axiale F de précompression déterminée (par exemple 100 Newtons). La position du bouchon 34 avant son introduction est représentée en trait mixte à la figure 7.

Le bouchon 34 est positionné axialement à l'emplacement exact voulu pour mettre l'arbre 6 en précompression à l'aide d'une machine de soudure ultrasonique provoquant la fusion de la matière plastique de la paroi 13 du logement 35 dans les irrégularités de surface 36. Cette machine est associée à un vérin de poussée définissant le niveau de la précompression de la ligne d'arbre. Le blocage est réalisé par durcissement de la matière plastique après arrêt du transducteur ultrasonique.

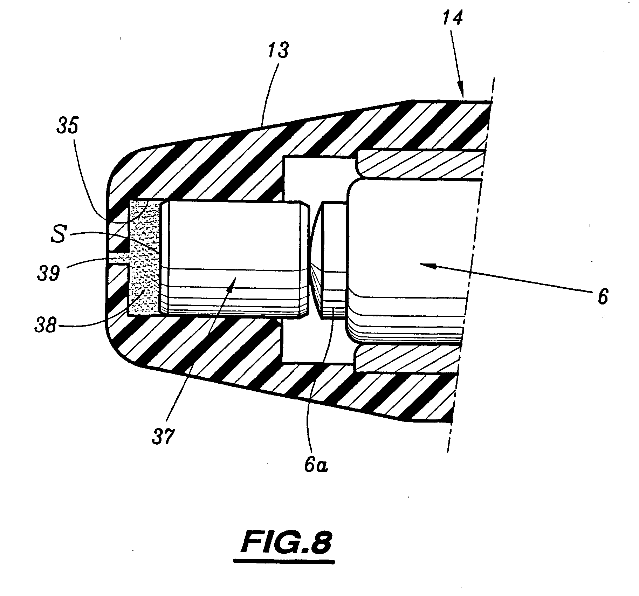

La figure 8 illustre une cinquième forme de réalisation, constituant une variante de la figure 7, dans laquelle le bouchon 37, de préférence métallique, présente une surface lisse et est bloqué dans sa position axiale, en compression sur l'extrémité 6a de l'arbre 6, par de la colle solidifiée 38. Cette dernière est injectée liquide par un ajutage axial 39 formé dans la paroi 13 du carter 14 et qui débouche dans le logement 35. La colle liquide est injectée sous une pression déterminée et remplit la partie du logement 35 située derrière le bouchon 37.

On utilise par exemple une colle thermofusible, fondant à une température inférieure à la température de fusion de la matière plastique du carter 14 (200°C) à basse pression.

A titre d'exemple numérique non limitatif, si la poussée axiale F est de 100 Newtons et que la section S du bouchon 37 est égale à 0,5 cm², la pression d'injection de la colle doit être égale à 20 bars.

Une injection de matière plastique identique à celle du carter 14 est difficilement envisageable, car elle devrait se faire à haute pression, ce qui impliquerait une très faible section du bouchon 37.

L'invention n'est pas limitée aux formes de réalisation décrites et peut comporter diverses variantes d'exécution. Ainsi la réalisation de la figure 8 pourrait être modifiée en ouvrant complètement le logement 35 sur l'extérieur du carter 14 comme représenté à la figure 7, en agençant des irrégularités de surface (rainures, moletage...) sur la surface du bouchon 37 et en ménageant un ajutage latéral ainsi qu'un chambrage dans la paroi 13 du carter 14, afin de pouvoir injecter de la colle liquide sur la périphérie du bouchon 37, une fois celui-ci correctement positionné axialement à l'emplacement voulu. Pour effectuer ce positionnement, on pousse le bouchon 37 par un vérin extérieur de précompression, et on le bloque en position par injection de colle dans ses rainures, par le chambrage du carter.

## Revendications

1. Motoréducteur (1), notamment pour l'entraînement d'équipement de véhicules, comprenant un rotor (5) pourvu d'un arbre d'induit (6), un carter réducteur (14) qui contient une roue dentée (11) en prise avec une vis sans fin (9) de l'arbre et pouvant entraîner un organe de sortie (12), ainsi que des moyens (120) pour supprimer, sous une précompression axiale (F) déterminée, tout jeu axial entre une extrémité (6a) de l'arbre d'induit et la paroi (13) du carter, lesdits moyens comprenant un bouchon (15) logé dans l'extrémité (13) du carter (14) et un piston (18), intercalé entre le bouchon et l'extrémité de l'arbre, le bouchon exerçant sur le piston et sur l'arbre ladite précompression axiale (F), réglée au montage, et des moyens (19) pour bloquer le piston dans sa position axiale correspondant à ladite précompression, **caractérisé en ce que** les moyens de blocage du piston (18) dans sa position axiale comprennent des irrégularités (19) formées sur la surface du piston en contact avec la paroi (13a) du carter (14) telles que des rainures, le piston étant métallique, et le blocage du piston par rapport à la paroi du carter est obtenu par fusion de la matière plastique constituant le carter dans lesdites aspérités, soit par ultrasons, soit par soudure haute fréquence.

2. Motoréducteur (1), notamment pour l'entraînement d'équipement de véhicules, comprenant un rotor (5) pourvu d'un arbre d'induit (6), un carter réducteur (14) qui contient une roue dentée (11) en prise avec une vis sans fin (9) de l'arbre et pouvant entraîner un organe de sortie (12), ainsi que des moyens (29) pour supprimer, sous une précompression axiale (F) déterminée, tout jeu axial entre une extrémité (6a) de l'arbre d'induit et la paroi (13) du carter, lesdits moyens comprenant un bouchon (15) logé dans l'extrémité (13) du carter (14) et un piston (22, 27), intercalé entre le bouchon et l'extrémité de l'arbre, le bouchon exerçant sur le piston et sur l'arbre ladite précompression axiale (F), réglée au montage, et des moyens pour bloquer le piston dans sa position axiale correspondant à ladite précompression, **caractérisé en ce que** lesdits moyens de blocage du piston comprennent des irrégularités de surface (23, 28) formées sur la surface du piston (22, 27) en contact avec la paroi (13a) du carter (14), au moins un canal (25) agencé latéralement au piston dans la paroi du carter et débouchant dans une chambre (26) de cette paroi, et de la colle durcie, injectée liquide par ce canal dans les irrégularités de surface.

3. Motoréducteur selon la revendication 2, **caractérisé en ce que** lesdites irrégularités de surface sont des crantages, rainures ou gorges (23, 28) agencées sur la surface périphérique du piston (22, 27) en contact avec la paroi (13a) du carter (14).

4. Motoréducteur, notamment pour l'entraînement d'équipement de véhicules, comprenant un rotor (5) pourvu d'un arbre d'induit (6), un carter réducteur (14) qui contient une roue dentée (11) en prise avec une vis sans fin (9) de l'arbre et pouvant entraîner un organe de sortie (12), ainsi que des moyens pour supprimer, sous une précompression axiale (F) déterminée, tout jeu axial entre une extrémité (6a) de l'arbre d'induit et la paroi (13) du carter, **caractérisé en ce que** dans la paroi (13a) du carter (14) est agencé un ajutage latéral débouchant dans un chambrage formé autour d'un bouchon, sur la surface duquel sont ménagées des irrégularités, et **en ce que** de la colle injectée liquide par l'ajutage et durcie par refroidissement, remplit les aspérités et le chambrage et bloque le bouchon dans la position axiale voulue afin qu'il exerce ladite précompression axiale sur l'arbre d'induit (6).

5. Motoréducteur, notamment pour l'entraînement d'équipement de véhicules, comprenant un rotor (5) pourvu d'un arbre d'induit (6), un carter réducteur (14) qui contient une roue dentée (11) en prise avec une vis sans fin (9) de l'arbre et pouvant entraîner un organe de sortie (12), ainsi que des moyens (33) pour supprimer, sous une précompression axiale (F) déterminée, tout jeu axial entre une extrémité (6a) de l'arbre d'induit et la paroi (13) du carter, lesdits moyens comprenant un bouchon métallique (34) monté coulissant dans un logement axial (35) formé dans la paroi (13) du carter (14) en regard de l'extrémité (6a) de l'arbre (6), et ledit bouchon étant déplacé axialement jusqu'à ce qu'il vienne en butée contre l'extrémité de l'arbre sous la poussée axiale (F) de précompression déterminée, puis bloqué dans cette position afin de supprimer tout jeu de l'arbre, **caractérisé en ce que** le bouchon (34) est bloqué axialement par fusion de la matière plastique de la paroi (13) du carter (14) dans des irrégularités de surface (36) du bouchon au moyen d'une machine à souder, par exemple aux ultrasons, les irrégularités de surface étant par exemple des rainures, gorges, crantages, un moletage..

## Patentansprüche

1. Getriebemotor (1). insbesondere für den Antrieb von Autozubehör, mit einem Rotor (5), der eine Ankerwelle (6) aufweist, einem Reduktionsgetriebe-Gehäuse (14), das ein Zahnrad (11) aufnimmt, das mit einer Schnecke (9) der Welle in Eingriff steht und ein Antriebsorgan (12) antreiben kann, sowie mit Mitteln (120) zur Unterdrückung, unter einer bestimmten axialen Vorspannung (F), jeglichen Axialspiels zwischen einem Ende (6a) der Ankerwelle und der Wand (13) des Gehäuses, wobei diese Mittel einen im Ende (13) des Gehäuses (14) aufgenommenen Stopfen (15) und einen Kolben (18) umfassen, der zwischen dem Stopfen und dem Ende der Welle eingefügt ist, wobei der Stopfen auf den Kolben und die Welle die genannte axiale Vorspannung (F) ausübt, die bei der Montage eingestellt wird, und Mittel (19) zum Blockleren des Kolbens in seiner Axialposition, die der genannten Vorspannung entspricht, **dadurch gekennzeichnet, daß** die Mittel zum Blockieren des Kolbens (18) in seiner Axialposition Unregelmäßigkeiten (19) umfassen, die an der mit der Wand (13a) des Gehäuses (14) in Berührung stehenden Oberfläche des Kolbens ausgebildet sind. etwa Nuten, wobei der Kolben aus Metall besteht und das Blockieren des Kolbens in Bezug auf die Wand des Gehäuses erreicht wird durch Einschmelzen des Kunststoffs, der das Gehäuse bildet, in die genannten Unebenheiten, sei es durch Ultraschall oder durch Hochfrequenzschweißung.

2. Getriebemotor (1), insbesondere für den Antrieb von Autozubehör, mit einem Rotor (5), der eine Ankerwelle (6) aufweist, einem Reduktionsgetriobe-Gehäuse (14), das ein Zahnrad (11) aufnimmt, das mit einer Schnecke (9) der Welle in Eingriff steht und ein Antriebsorgan (12) antreiben kann, sowie mit Mitteln (29) zur Unterdrückung, unter einer bestimmten axialen Vorspannung (F). Jeglichen Axialspiels zwischen einem Ende (6a) der Ankerwelle und der Wand (13) des Gehäuses, wobei diese Mittel einen im Ende (13) des Gehäuses (14) aufgenommenen Stopfen (15) und einen Kolben (22, 27) umfassen, der zwischen dem Stopfen und dem Ende der Welle eingefügt ist, wobei der Stopfen auf den Kolben und die Welle die genannte axiale Vorspannung (F) ausübt, die bei der Montage eingestellt wird, und Mittel zum Blockieren des Kolbens in seiner Axialposition, die der genannten Vorspannung entspricht, **dadurch gekennzeichnet, daß** die genannten Mittel zum Blockieren des Kolbens Oberflächenunregelmäßigkeiten (23, 28), die an der mit der Wand (13a) des Gehäuses (14) in Berührung stehenden Oberfläche des Kolbens (22, 27) ausgebildet sind, wenigstens einen Kanal (25), der seitlich des Kolbens in der Wand des Gehäuses ausgebildet ist und in eine Kammer (26) dieser Wand mündet, und ausgehärteten Klebstoff umfassen, der im flüssigen Zustand durch diesen Kanal in die Oberflächenunregelmäßigkeiten injiziert worden ist.

3. Getriebemotor nach Anspruch 2, **dadurch gekennzeichnet, daß** die genannten Oberflächenunregelmäßigkeiten Rasten, Rillen oder Nuten (23, 28) sind, die in der mit der Wand (13a) des Gehäuses (14) in Berührung stehenden Urnfangsfläche des Kolbens (22, 27) ausgebildet sind.

4. Getriebemotor, insbesondere für den Antrieb von Autozubehör, mit einem Rotor (5), der eine Ankerwelle (6) aufweist, einem Reduktionsgetriebe-Gehäuse (14), das ein Zahnrad (11) aufnimmt, das mit einer Schnecke (9) der Welle in Eingriff steht und ein Antriebsorgan (12) antreiben kann, sowie mit Mitteln zur Untedräckung, unter einer bestimmten axialen Vorspannung (F), jeglichen Axialspiels zwischen einem Ende (6a) der Ankerwelle und der Wand (13) des Gehäuses, **dadurch gekennzeichnet, daß** in der Wand (13a) des Gehäuses (14) ein seitliches Mundstück ausgebildet ist, das in eine Höhlung mündet, die um einen Stopfen herum ausgebildet ist, in dessen Oberfläche Unregelmäßigkeiten eingearbeitet sind, und daß Klebstoff, der im flüssigen Zustand durch das Mundstück injiztert worden ist und durch Kühlung erstarrt ist, die Unebenheiten und die Höhlung ausfüllt und den Stopfen in der gewünschten Axialposition blockiert, damit er die genannte axiale Vorspannung auf die Ankerwelle (6) ausübt.

5. Getrlebemotor, insbesondere für den Antrieb von Autozubehör, mit einem Rotor (5). der eine Ankerwelle (6) aufweist, einem Reduktionsgetriebe-Gehäuse (14), das ein Zahnrad (11) aufnimmt, das mit einer Schnecke (9) der Welle in Eingriff steht und ein Antriebsorgan (12) antreiben kann, sowie mit Mitteln zur Unterdrückung, unter einer bestimmten axialen Vorspannung (F), jeglichen Axialspiels zwischen einem Ende (6a) der Ankerwelle und der Wand (13) des Gehäuses, wobei diese Mittel einen metallischen Stopfen (34) umfassen, der verschiebbar in einer axialen Aufnahme (35) montiert ist, die gegenüberliegend zum Ende (6a) der Welle (6) in der Wand (13) des Gehäuses (14) ausgebildet ist, und dieser Stopfen so weit axial verschoben ist, bis er mit der bestimmten axialen Vorspannkraft (F) am Ende der Welle anliegt, und der dann in dieser Position blockiert worden ist, um jegliches Spiel der Welle zu unterdrücken, **dadurch gekennzeichnet, daß** der Stopfen (34) axial blockiert ist durch Einschmelzen von Kunststoff der Wand (13) des Gehäuses (14) in Oberflächenunregelmäßigkeiten (36) des Stopfens, mit Hilfe eines Schweißgerätes, beispielsweise eines Ultraschallschweißgerätes, wobei die Oberflächenunregelmäßigkeiten beispielsweise Rillen, Nuten, Rasten oder eine Rändelung sind..

## Claims

1. Geared motor (1), notably for driving vehicle equipment, comprising a rotor (5) provided with an armature shaft (6), a gear-casing (14) which contains a gearwheel (11) engaging with an endless screw (9) of the shaft and able to drive an output member (12), and means (120) for eliminating, under predetermined axial precompression (F), any axial play between one end (6a) of the armature shaft and the wall (13) of the casing, said means comprising a plug (15) lodged in the end (13) of the casing (14) and a piston (18), intercalated between the plug and the end of the shaft, the plug exerting said axial precompression (F), set on assembly, on the piston and on the shaft, and means (19) for blocking the piston in its axial position corresponding to said precompression, **characterised in that** the means for blocking the piston (18) in its axial position comprise irregularities (19) formed on the surface of the piston in contact with the wall (13a) of the casing (14) such as grooves, the piston being made of metal, and the blocking of the piston relative to the wall of the casing is achieved by melting the plastic material which constitutes the gear-casing into said irregularities, either by ultrasound or by high frequency welding.

2. Geared motor (1), notably for driving vehicle equipment, comprising a rotor (5) provided with an armature shaft (6), a gear-casing (14) which contains a gearwheel (11) engaging with an endless screw (9) of the shaft and able to drive an output member (12), and means (29) for eliminating, under predetermined axial precompression (F), any axial play between one end (6a) of the armature shaft and the wall (13) of the casing, said means comprising a plug (15) lodged in the end (13) of the casing (14) and a piston (22, 27), intercalated between the plug and the end of the shaft, the plug exerting said axial precompression (F), set on assembly, on the piston and on the shaft, and means for blocking the piston in its axial position corresponding to said precompression, **characterised in that** the means for blocking the piston comprise surface irregularities (23, 28) formed on the surface of the piston (22, 27) in contact with the wall (13a) of the casing (14), at least one channel (25) arranged laterally to the piston in the wall of the casing and opening into a chamber (26) of this wall, and hardened adhesive injected in liquid form through this channel into the surface irregularities.

3. Geared motor according to claim 2, **characterised in that** said surface irregularities are serrations, notches or grooves (23, 28) provided on the peripheral surface of the piston (22, 27) in contact with the wall (13a) of the casing (14).

4. Geared motor, particularly for driving vehicle equipment, comprising a rotor (5) provided with an armature shaft (6), a gear-casing (14) which contains a gearwheel (11) engaging with an endless screw (9) of the shaft and capable of driving an output member (12), and means for eliminating, under predetermined axial precompression (F), any axial play between one end (6a) of the armature shaft and the wall (13) of the casing, **characterised in that** in the wall (13a) of the casing (14) there is provided a lateral nozzle opening into a recess formed around a plug, on the surface of which are provided irregularities, and **in that** adhesive injected in liquid form through the nozzle and hardened by cooling fills the irregularities and the recess and secures the plug in the desired axial position so that it exerts said axial precompression on the armature shaft (6).

5. Geared motor, particularly for driving vehicle equipment, comprising a rotor (5) provided with an armature shaft (6), a gear-casing (14) which contains a gearwheel (11) engaging with an endless screw (9) of the shaft and capable of driving an output member (12), and means (33) for eliminating, under predetermined axial precompression (F), any axial play between one end (6a) of the armature shaft and the wall (13) of the casing, said means comprising a metal plug (34) slidably mounted in an axial recess (35) formed in the wall (13) of the casing (14) opposite the end (6a) of the shaft (6), said plug being moved axially until it comes to abut against the end of the shaft under the axial thrust (F) of predetermined precompression, then blocked in this position in order to eliminate any play of the shaft, **characterised in that** the plug (34) is axially blocked by the melting of the plastic material of the wall (13) of the casing (14) in the surface irregularities (36) of the plug by means of a welding machine, e.g. an ultrasonic welding machine, the surface irregularities being, for example, notches, grooves, serrations or milled areas.
